# EUROPEAN PATENT APPLICATION

(11) **EP 4 647 298 A1**
(43) Date of publication of application: **12.11.2025**
(21) Application number: 23915777.9
(22) Date of filing: 15.12.2023
(51) Int. Cl.: B60P 3/355

(54) **COLLAPSIBLE LIFTING/LOWERING MOBILE TRAILER HOUSE AND RECREATIONAL VEHICLE**

(30) Priority: 09.01.2023 CN 202320051936 U
(71) Applicant: Hou, Baoquan, Tongzhou District, Beijing 101100 (CN)
(72) Inventor: Hou, Baoquan, Tongzhou District, Beijing 101100 (CN)
(74) Representative: Cleanthous, Marinos
(86) International application number: PCT/CN2023/139131
(87) International publication number: WO 2024/149023

(57) **Abstract**

Provided are a collapsible lifting/lowering mobile trailer house and a recreational vehicle. The trailer house includes a frame; a house body is provided on the frame; the house body comprises roofs, a first side wall plate, a second side wall plate, and a lifting/lowering frame; the roofs are hingedly connected to the lifting/lowering frame through connecting rods; upper ends of the first side wall plate and the second side wall plate are slidably connected to the inner sides of the roofs; the lifting/lowering frame is slidably connected to vertically arranged sliding rails; and the lifting/lowering frame is provided with driving modules, which drive the lifting/lowering frame to move up and down along the sliding rails, so as to drive the roofs, the first side wall plate, and the second side wall plate to be opened/closed.

## Description

### RELATED APPLICATIONS

The present patent document is a continuation of PCT Application Serial No. PCT/CN2023/139131, filed December 15, 2023, designating the United States and published in English, which is hereby incorporated by reference.

The present patent document claims the benefit of priority to Patent Application No. 202320051936.1, filed January 9, 2023, and entitled "COLLAPSIBLE LIFTING/LOWERING MOBILE TRAILER HOUSE AND RECREATIONAL VEHICLE," the entire contents of each of which are incorporated herein by reference.

### BACKGROUND

### 1. Technical Field

The present disclosure belongs to the technical field of recreational vehicles, and relates to a collapsible lifting/lowering mobile trailer house and a recreational vehicle.

### 2. Background Information

A recreational vehicle is a special mobile vehicle equipped with household infrastructure. A towable recreational vehicle, commonly known as a trailer house, is a recreational vehicle, which achieves mobility by being towed by a motor vehicle.

In the prior art, the trailer house is fixed in size. The top of the collapsible trailer house is of a flat structure, which limits the expansion of its usable area. In addition, the existing trailer house is basically unable to walk on water, which affects the use range of the recreational vehicle.

Therefore, it is urgent to design a collapsible lifting/lowering mobile trailer house and a recreational vehicle to solve the technical problems existing in the prior art.

### BRIEF SUMMARY

An objective of the present disclosure is to solve some technical problems in the prior art at least to a certain extent. A collapsible lifting/lowering movable trailer house and a recreational vehicle are provided, which have a reasonable structure and are convenient to operate. The house body is opened and closed through vertical movement of the lifting/lowering frame, and the use reliability is effectively guaranteed. Additionally, water buoyancy compartments are arranged at the bottom of the frame and on the outer sides of supporting plates, so that the recreational vehicle can float on water, and the use range of the recreational vehicle is widened.

In order to solve the above technical problems, the present disclosure provides a collapsible lifting/lowering mobile trailer house, including a frame, where a house body is arranged above the frame; the house body includes roofs, a first side wall plate, a second side wall plate, and a lifting/lowering frame, the roofs are hingedly connected to the lifting/lowering frame through connecting rods, upper ends of the first side wall plate and the second side wall plate are slidably connected to inner sides of the roofs, the lifting/lowering frame is slidably connected to a vertically arranged sliding rail; and the lifting/lowering frame is provided with a driving module, which drives the lifting/lowering frame to move up and down along the sliding rail, so as to drive the roof, the first side wall plate and the second side wall plate to be opened/closed.

In some embodiments, there is a pair of the roofs, which are fixed as a whole through a connecting frame; and the house body in an open state is of a herringbone structure.

In some embodiments, the driving module is detachably connected below the lifting/lowering frame and is a hydraulic cylinder and/or an electric cylinder.

In some embodiments, the number of lifting/lowering frames is not less than one, which are evenly arranged at intervals along a horizontal axis, each of the lifting/lowering frames moves up and down along a pair of sliding rails, and the sliding rails are vertically arranged above the frame at intervals.

In some embodiments, the first side wall plate and the second side wall plate are abutted against an inner side wall of the roof through a sliding frame, respectively; the lifting/lowering frame is connected with the first side wall plate and the second side wall plate through a steel wire rope, and the vertically moving lifting/lowering frame is capable of pulling the first side wall plate and the second side wall plate to be opened and closed through the steel wire rope.

In some embodiments, the first side wall plate is of an arc structure, one end of the sliding frame is hingedly connected to the first side wall plate, and the other end of the sliding frame is slidably abutted against the inner side wall of the roof; the second side wall plate is of a plate-like structure, one end of the sliding frame is hingedly connected to the second side wall plate, and the other end of the sliding frame is slidably abutted against the inner side wall of the roof.

In some embodiments, the bottom of the frame is provided with a first water buoyancy compartment, and concave-convex mechanisms are arranged at intervals on an outer side wall of the first water buoyancy compartment.

In some embodiments, the collapsible lifting/lowering mobile trailer house further includes a platform plate, where the platform plate is arranged at an edge of the frame; an upper part of the platform plate is provided with a support column; and when the house body is unfolded, the platform plate is horizontally arranged, and the support column is vertically arranged.

In some embodiments, the collapsible lifting/lowering mobile trailer house further includes a second water buoyancy compartment which is arranged on an outer side of the platform plate; where an outer side wall of the second water buoyancy compartment is of an arc structure, and when the house body is unfolded, the second water buoyancy compartment is arranged at a lower side of the platform plate.

In addition, the present disclosure further discloses a recreational vehicle, including a power terminal and the collapsible lifting/lowering mobile trailer house described above.

The present disclosure has the following beneficial effects.

The collapsible lifting/lowering movable trailer house and the recreational vehicle according to the present disclosure have a reasonable structure and are convenient to operate. The house body is opened and closed through vertical movement of the lifting/lowering frame, and the use reliability is effectively guaranteed. Additionally, water buoyancy compartments are arranged at the bottom of the frame and on the outer sides of supporting plates, so that the recreational vehicle can float on water, and the use range of the recreational vehicle is widened. The unfolded house body is of a herringbone structure, which can effectively widen the usable area of the recreational vehicle.

### BRIEF DESCRIPTION OF THE DRAWINGS

The above advantages of the present disclosure will become clearer and understandable through the detailed description taken in conjunction with the following drawings. The drawings are only schematic and do not limit the present disclosure, in which:
FIG. 1 is a schematic diagram of a collapsible lifting/lowering mobile trailer house according to the present disclosure;
FIG. 2 is a schematic diagram of a collapsible lifting/lowering mobile trailer house in an unfolded state according to the present disclosure;
FIG. 3 is a partial enlarged view at A in FIG. 2;
FIG. 4 is a schematic diagram of mounting positions of a first water buoyancy compartment and a second water buoyancy compartment according to the present disclosure; and
FIG. 5 is a side view of a collapsible lifting/lowering mobile trailer house in a closed state according to the present disclosure.

### DETAILED DESCRIPTION OF THE DRAWINGS AND THE PRESENTLY PREFERRED EMBODIMENTS

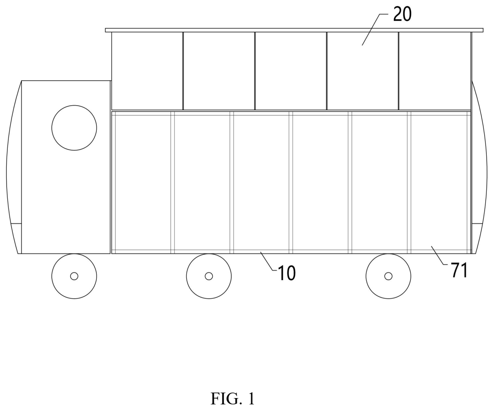

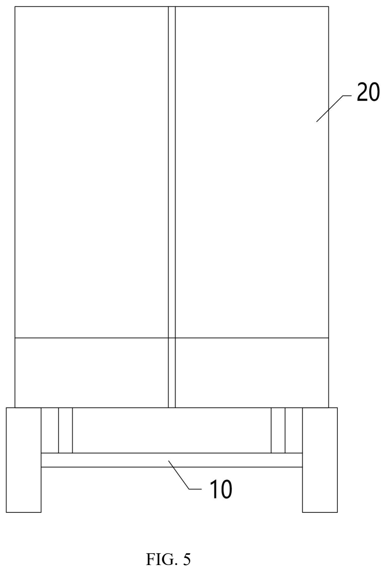

FIG. 1 to FIG. 5 are related schematic diagrams of a collapsible lifting/lowering mobile trailer house and a recreational vehicle according to the present disclosure. The present disclosure will be described in detail with reference to the detailed description and the drawings.

The embodiments described here are specific embodiments of the present disclosure, which are used to illustrate the concept of the present disclosure, which are all explanatory and exemplary, and should not be interpreted as limiting the embodiments the present disclosure and the scope of the present disclosure. In addition to the embodiments described here, those skilled in the art can also use other obvious technical solutions based on the contents disclosed in the claims and the specifications of the present disclosure. The technical solutions include the technical solutions that use any obvious alternatives and modifications made to the embodiments described here.

The drawings in this specification are schematic diagrams to help describe the concept of the present disclosure, and schematically show the shapes of various parts and their relationships. It is to be noted that the drawings are not drawn to the same scale in order to clearly show the structure of each component of the embodiment of the present disclosure. The same reference numerals are used to indicate the same parts.

A schematic diagram of a collapsible lifting/lowering mobile trailer house according to the present disclosure is shown in FIG. 1, FIG. 2 and FIG. 5. The collapsible lifting/lowering mobile trailer house includes a frame 10. A house body 20 is arranged above the frame 10.

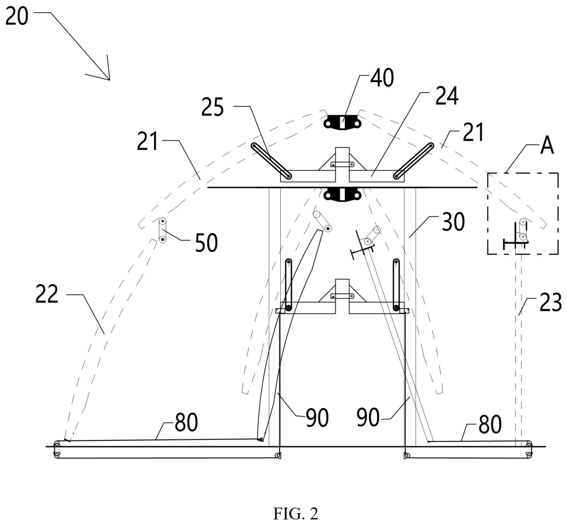

In FIG. 2, the house body 20 includes roofs 21, a first side wall plate 22, a second side wall plate 23, and a lifting/lowering frame 24. The roofs 21 are hingedly connected to the lifting/lowering frame 24 through connecting rods 25. Upper ends of the first side wall plate 22 and the second side wall plate 23 are slidably connected to inner sides of the roofs 21. The lifting/lowering frame 24 is slidably connected to a sliding rail 30. That is, the connecting rod 25 is of a plate-like structure. One end of the connecting rod is hingedly connected to the roof 21, and the other end of the connecting rod is hingedly connected to the lifting/lowering frame 24.

Further, there is at least one lifting/lowering frame 24, which can move up and down along the length direction of the sliding rail 30 to open/close the roof 21.

In the embodiment shown in FIG. 2, a driving module 90 is detachably arranged below the lifting/lowering frame 24. The driving module 90 can be a hydraulic cylinder and/or an electric cylinder to drive the lifting/lowering frame 24 to move and change the opening/closing state of the roof 21. After the house body 20 is opened, the driving module 90 can be stored in other places to reduce the occupation of the interior space of the trailer house.

It can be understood that an operator can manually push and pull the lifting/lowering frame 24 to drive the vertical position of the roof 21 to open and close the roof 21.

In some embodiments, the lifting/lowering frame 24 is connected with the first side wall plate 22 and the second side wall plate 23 through a steel wire rope 80. As shown in FIG. 2, the vertically moving lifting/lowering frame 24 is capable of pulling the first side wall plate 22 and the second side wall plate 23 through the steel wire rope 80 to drive the first side wall plate 22 and the second side wall plate 23 to be opened and closed.

Further, one end of the steel wire rope 80 is connected to the lifting/lowering frame 24, and the other end thereof is connected to the lower ends of the first side wall plate 22 and the second side wall plate 23. The mounting position of the steel wire rope 80 is defined by pulleys. When the first side wall plate 22 and the second side wall plate 23 are opened, the first side wall plate 22 and the second side wall plate 23 slide to the bottom of the roof 21.

In the embodiment shown in FIG. 2, a dashed line is used to show a schematic diagram of a house body 20 in an open state. A solid line is used to show a schematic diagram of a house body 20 in a closed state. The movement of the lifting/lowering frame 24 pulls the steel wire rope 80 to open and close the house body 20.

Specifically, the lifting/lowering frame 24 can be moved manually, hydraulically or electrically to move along the length direction of the sliding rail 30, so as to drive the first side wall plate 22 and the second side wall plate 23 to move and open and close the house body 20.

As an embodiment of the present disclosure, there is a pair of the roofs 21, which are fixed as a whole through a connecting frame 40. Specifically, pin holes are arranged at both ends of the connecting frame 40. The upper end of the roof 21 passes through the pin holes via a pin axis, so that the roof 21 is hingedly connected to the connecting frame 40.

Further, the house body 20 is arranged in a herringbone shape along a central axis, which can increase the overall height of the house body 20, effectively widen the usable area of the trailer house, and guarantee the living comfort of people. At the same time, the external shape of the house body 20 is optimized. The height of the trailer house is improved. The trailer house is closer to a living house, and the living comfort is improved. In addition, the herringbone house body 20 is beneficial to drainage, and prevents rainwater from leaking into the house body 20, so as to guarantee the use effect of the trailer house.

In FIG. 2, there is a pair of the sliding rails 30, which are vertically arranged above the frame 10 at intervals.

Further, the first side wall plate 22 and the second side wall plate 23 are abutted against an inner side wall of the roof 21 through a sliding frame 50.

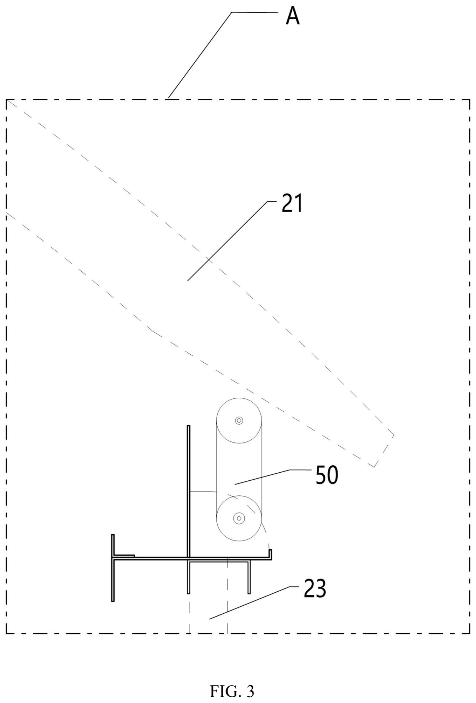

As an embodiment of the present disclosure, a chute may be provided on the inner side of the roof 21. The sliding frame 50 shown in FIG. 3 is clamped in the chute, so that the first side wall plate 22 and the second side wall plate 23 slide along the inner side wall of the roof 21.

In FIG. 2, the first side wall plate 22 is of an arc structure. One end of the sliding frame 50 is hingedly connected to the first side wall plate 22, and the other end of the sliding frame is slidably abutted against the inner side wall of the roof 21. The outer end of the carriage 50 is provided with a pulley. The pulley is clamped in the chute of the roof 21.

In FIG. 2, the roof 21 is of an arc structure. A circular window is arranged at the side of the house body 20. FIG. 1 and FIG. 2 only provide an embodiment of a collapsible lifting/lowering mobile trailer house. The components of the house body 20 can be in other structural forms. The position and the shape of the window can be flexibly set according to demands of people. In FIG. 3, the second side wall plate 23 is of a plate-like structure. One end of the sliding frame 50 is hingedly connected to the second side wall plate 23, and the other end of the sliding frame is slidably abutted against the inner side wall of the roof 21. In some embodiments, the first side wall plate 22 may be a molded wall plate and/or a glass door and window, and the second side wall plate 23 is similar in structure to the first side wall plate 22.

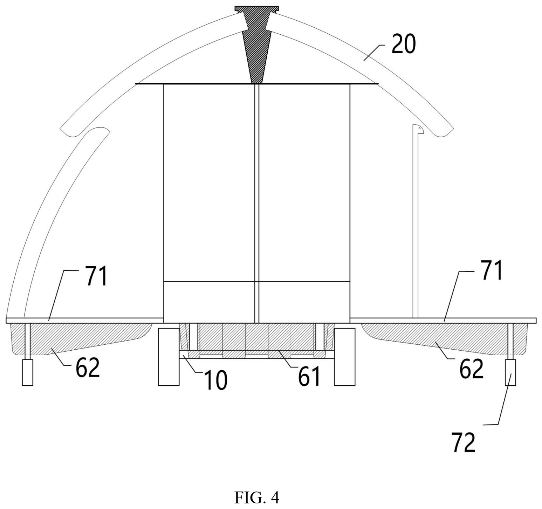

In the embodiment shown in FIG. 4, the bottom of the frame 10 is provided with a first water buoyancy compartment 61, and concave-convex mechanisms are arranged at intervals on an outer side wall of the first water buoyancy compartment 61 to enhance the structural strength of the water buoyancy compartment.

Further, the collapsible lifting/lowering mobile trailer house further includes a platform plate 71 shown in FIG. 1 and a support column 72 shown in FIG. 4. The platform plate 71 is arranged at an edge of the frame 10. The support column 72 is connected to the platform plate 71. When the trailer house is in the closed state, the platform plate 71 is located on the opposite outer side of the house body 20 as the outer wall of the trailer house.

Further, the collapsible lifting/lowering mobile trailer house further includes a front end plate and a rear end plate which are arranged between adjacent platform plates 71 and enclosed with the adjacent platform plates. The front end plate and the rear end plate are arranged in pairs to block the end of the house body 20. The front end plate and the rear end plate are hingedly connected to the edge of the house body 20. The front end plate and the rear end plate can rotate along a hinge point to be unfolded and closed. In some embodiments, the front end plate and the rear end plate may be hingedly connected to the end of the house body 20 by a hinge. As a solution of this embodiment, the front end plate and the rear end plate can also be in the form of a folded structure or a detachable structure to control the space occupation of the front end plate and the rear end plate.

In the present disclosure, the roof 21, the first side wall plate 22, the second side wall plate 23, the platform plate 71, the front end plate and the rear end plate can be arc plates or flat plates to guarantee the overall shape of the trailer house.

In FIG. 4, when the house body 20 is unfolded, the platform plate 71 is horizontally arranged, and the support column 72 is vertically arranged. It should be noted that when the house body 20 is opened, it is necessary to first open the platform plate 71 arranged at the side of the frame 10, so that the platform plate 71 is in a horizontal state; then, the lifting/lowering frame 24 is moved upward manually, hydraulically or electrically to open the roof 21; and thereafter, the lifting/lowering frame 24 drives the first side wall plate 22 and the second side wall plate 23 to slide along the inner side wall of the roof 21 through the steel wire rope 80 to open the house body 20.

Further, the collapsible lifting/lowering mobile trailer house further includes a second water buoyancy compartment 62 which is arranged on an outer side of the platform plate 71. An outer side wall of the second water buoyancy compartment 62 is of an arc structure. When the house body 20 is unfolded, the second water buoyancy compartment 62 is arranged at a lower side of the platform plate 71. The second water buoyancy compartment 62 is arranged, which enables the trailer house to float on the water surface and widens the use range of the trailer house. The second water buoyancy compartment 62 with an arc structure is arranged, which is beneficial to reducing the resistance, so as to control the influence of the shape of the second water buoyancy compartment 62 on the driving effect of the recreational vehicle.

As an embodiment of the present disclosure, the roof 21, the first side wall plate 22, and the second side wall plate 23 are made of plastic materials, which can be formed by injection molding, die-casting and stamping processes. It can be understood that the roof 21, the first side wall plate 22 and the second side wall plate 23 can also be made of materials such as Sheet Molding Compound (SMC) composite materials and metals to guarantee the structural strength and waterproofness of the trailer house and improve the use effect of the recreational vehicle.

The platform plate 71 can be made of a metal material with high strength, which plays a supporting role after the house body 20 is unfolded. In order to increase the strength of the platform plate 71, a plurality of reinforcing ribs may be provided for the platform plate 71.

In order to improve the living comfort of the trailer house, drainage structures can be arranged along the roof 21, the first side wall plate 22 and the second side wall plate 23 to smoothly guide rainwater to the outside in time.

In the present disclosure, driving modules 90 are provided with at a front end and a rear end of the frame 10. The driving modules 90 arranged at the ends of the frame 10 are arranged in pairs, and are symmetrically and vertically arranged on the left and right sides, so as to ensure that power is provided for the movement of the lifting/lowering frame 24 under any conditions, thereby opening and closing the trailer house.

In the embodiment shown in FIG. 1, wheels are arranged at the bottom of the trailer house, so that the trailer house can be moved to a suitable position when being driven by manpower or motor vehicles. In some embodiments, a hoisting structure, such as a lifting hook, can be arranged at the top of the house body 20 to hoist the trailer house to a suitable position for fixed use.

A plurality of trailer houses according to the present disclosure can be assembled as a whole, such as horizontally or vertically, so that a plurality of trailer houses are connected in series. The trailer house is closer to a traditional building. A collapsible terrace can be installed on the roof to improve the living comfort.

In addition, the present disclosure further discloses a recreational vehicle, including a power terminal and the collapsible lifting/lowering mobile trailer house described above. The power terminal can be various types of motor vehicles to provide power for the movement of the collapsible lifting/lowering mobile trailer house. It can be understood that the power terminal can also be a water vehicle, such as a speedboat and a cruise ship.

The trailer house and the recreational vehicle according to the present disclosure can be used in places such as water, land, beaches and mountains, and can be used for tourism, vacation, camping, exploration, medical treatment or long-term residence, which have the advantages of wide use.

Compared with the disadvantages and shortcomings of the prior art, the collapsible lifting/lowering mobile trailer house and the recreational vehicle according to the present disclosure have a reasonable structure and are convenient to operate. The house body is opened and closed through vertical movement of the lifting/lowering frame, and the use reliability is effectively guaranteed. Additionally, water buoyancy compartments are arranged at the bottom of the frame and on the outer sides of supporting plates, so that the recreational vehicle can float on water, and the use range of the recreational vehicle is widened. The unfolded house body is of a herringbone structure, which can effectively widen the usable area of the recreational vehicle.

The present disclosure is not limited to the above embodiments. Anyone can obtain other products in various forms under the inspiration of the present disclosure. However, no matter what changes are made in shapes or structures, any technical solution that is the same as or similar to the present disclosure falls within the scope of protection of the present disclosure.

## Claims

1. A collapsible lifting/lowering mobile trailer house, comprising a frame (10), wherein a house body (20) is arranged above the frame (10); the house body (20) comprises roofs (21), a first side wall plate (22), a second side wall plate (23), and a lifting/lowering frame (24), the roofs (21) are hingedly connected to the lifting/lowering frame (24) through connecting rods (25), upper ends of the first side wall plate (22) and the second side wall plate (23) are slidably connected to inner sides of the roofs (21), the lifting/lowering frame (24) is slidably connected to a vertically arranged sliding rail (30); and the lifting/lowering frame (24) is provided with a driving module (90), which drives the lifting/lowering frame (24) to move up and down along the sliding rail (30), so as to drive the roof (21), the first side wall plate (22) and the second side wall plate (23) to be opened/closed.

2. The collapsible lifting/lowering mobile trailer house according to claim 1, wherein there is a pair of the roofs (21), which are fixed as a whole through a connecting frame (40); and the house body (20) in an open state is of a herringbone structure.

3. The collapsible lifting/lowering mobile trailer house according to claim 1, wherein the driving module (90) is detachably connected below the lifting/lowering frame (24) and is a hydraulic cylinder and/or an electric cylinder.

4. The collapsible lifting/lowering mobile trailer house according to claim 1, wherein the number of lifting/lowering frames (24) is not less than one, which are evenly arranged at intervals along a horizontal axis, each of the lifting/lowering frames (24) moves up and down along a pair of sliding rails (30), and the sliding rails (30) are vertically arranged above the frame (10) at intervals.

5. The collapsible lifting/lowering mobile trailer house according to claim 1, wherein the first side wall plate (22) and the second side wall plate (23) are abutted against an inner side wall of the roof (21) through a sliding frame (50), respectively; the lifting/lowering frame (24) is connected with the first side wall plate (22) and the second side wall plate (23) through a steel wire rope (80), and the vertically moving lifting/lowering frame (24) is capable of pulling the first side wall plate (22) and the second side wall plate (23) to be opened and closed through the steel wire rope (80).

6. The collapsible lifting/lowering mobile trailer house according to claim 5, wherein the first side wall plate (22) is of an arc structure, one end of the sliding frame (50) is hingedly connected to the first side wall plate (22), and the other end of the sliding frame is slidably abutted against the inner side wall of the roof (21); the second side wall plate (23) is of a plate-like structure, one end of the sliding frame (50) is hingedly connected to the second side wall plate (23), and the other end of the sliding frame is slidably abutted against the inner side wall of the roof (21).

7. The collapsible lifting/lowering mobile trailer house according to claim 1, wherein the bottom of the frame (10) is provided with a first water buoyancy compartment (61), and concave-convex mechanisms are arranged at intervals on an outer side wall of the first water buoyancy compartment (61).

8. The collapsible lifting/lowering mobile trailer house according to claim 1, further comprising a platform plate (71), wherein the platform plate (71) is arranged at an edge of the frame (10); an upper part of the platform plate (71) is provided with a support column (72); and when the house body (20) is unfolded, the platform plate (71) is horizontally arranged, and the support column (72) is vertically arranged.

9. The collapsible lifting/lowering mobile trailer house according to claim 8, further comprising a second water buoyancy compartment (62) which is arranged on an outer side of the platform plate (71); wherein an outer side wall of the second water buoyancy compartment (62) is of an arc structure, and when the house body (20) is unfolded, the second water buoyancy compartment (62) is arranged at a lower side of the platform plate (71).

10. A recreational vehicle, comprising a power terminal and the collapsible lifting/lowering mobile trailer house according to any one of claims 1.
